# EUROPEAN PATENT APPLICATION

(11) **EP 3 266 672 A1**
(43) Date of publication of application: **10.01.2018**
(21) Application number: 17174443.6
(22) Date of filing: 05.06.2017
(51) Int. Cl.: B62B 3/02, B62B 3/12

(54) **FOLDING GOLF CART**

(30) Priority: 06.07.2016 CN 201620708773 U; 08.05.2017 US 201715589007
(71) Applicant: Wang, Jonathan Hwan, Fremont, CA 94539 (US)
(72) Inventor: Wang, Jonathan Hwan, Fremont, CA 94539 (US)
(74) Representative: Appleyard Lees IP LLP

(57) **Abstract**

A folding golf cart including a chassis (2), a main rod (1), a handle (3), a handle-connected seat body (4), a front wheel (5), two rear wheels (6), and two sets of foldable rear wheel frames (7). The chassis includes two chassis rods (21), a front-connected seat body (22), and a rear-connected seat body (23). The front ends of the two chassis rods are fixed to the front-connected seat body. The rear ends of the two chassis rods are fixed to the rear-connected seat body. The handle is rotationally connected to the handle-connected seat body. The bottom part of the main rod is hinged to the rear-connected seat body. The two rear wheels are respectively connected to the sides of the rear-connected seat body through the foldable rear wheel frames. The middle part of the front-connected seat body is connected to the front wheel through a front wheel retraction and extension device (8).

## Description

The application relates to the technical field of golf carts, particularly foldable golf carts.

The primary requirement of a golf cart is a frame that is sufficiently large for carrying golf bags of different sizes. The upper part and the lower part of the golf bag are usually supported by the upper and lower bag brackets on the cart, which requires a greater distance between the upper and the lower bag brackets and makes it difficult to store or transport the golf cart. The existing foldable golf cart mainly consists of a chassis, a main rod, a handle, a front wheel assembly, and a rear wheel assembly. Due to the general structure of the chassis' single round pipe, wherein the front wheel assembly is installed on the front end of the round pipe such that the front wheel cannot be retracted into the chassis, the cart occupies a relatively large volume and is rather difficult to fold. The front wheel assembly, mounted on a chassis having a single round pipe, has an unstable structure, affecting the steering flexibility of the front wheel.

According to the present invention there is provided an apparatus and method as set forth in the appended claims. Other features of the invention will be apparent from the dependent claims, and the description which follows.

In the exemplary embodiments, a foldable golf cart comprises a front wheel arm that is connected to a chassis through a front wheel retraction and extension device such that the front wheel arm is moveable between an extended state and a retracted state. Suitably, the foldable golf cart includes a front wheel assembly comprising a front wheel arm to which a front wheel is arranged so as to rotate relative thereto.

Preferably, the front wheel arm is a front fork and references herein to front fork apply equally to a front wheel arm.

Preferably, the foldable golf cart may have a chassis with two parallel chassis rods, a front-connected seat body, and a rear-connected seat body, wherein the front ends of the two chassis rods are fixed to the front-connected seat body and the rear ends of the two chassis rods are fixed to the rear-connected seat body. The foldable golf cart may further have a main rod, wherein the bottom part of the main rod is hinged to the rear-connected seat body. A handle may be rotationally connected to a handle-connected seat body, wherein the handle-connected seat body is fixed to the top of the main rod. A front wheel may be provided, wherein a middle part of the front-connected seat body is connected to the front wheel through the front wheel retraction and extension device. Two rear wheels may be respectively connected to sides of the rear-connected seat body through two sets of foldable rear wheel frames.

Preferably, the front wheel retraction and extension device includes a front fork, a rotating seat fixed to a rear end of the front fork, and a spring jack mechanism for locking the rotating seat in an extended or retracted position. Here, a bottom part of the front-connected seat body is fitted with a holding slot, a part of the rotating seat proximate to the rear end of the front fork is hinged at both sides of the holding slot, a rear end of the rotating seat is fitted with a cam part, and the spring jack mechanism is connected between the holding slot and the cam part.

Suitably, the spring jack mechanism is a resilient member that acts to urge the front wheel arm towards the extended state when the front wheel arm is in the extended state. That is, when the front wheel arm is in the extended state, the resilient member counteracts the gravitational force acting to urge the front wheel arm to move away from the extended state. Likewise, when the front wheel arm is in the retracted state, the resilient member counteracts the gravitational force acting to urge the front wheel arm to move away from the retracted state. Suitably, the front wheel arm is delimited in the retracted and extended state. For instance, further movement of the front wheel arm is delimited by abutment of the front wheel arm and chassis. Appropriate force exerted on the front wheel assembly can extend or retract the front wheel arm by overcoming the force applied by the resilient member urging the front wheel arm to the respective state.

Preferably, an end of the front wheel arm forms a rotating seat. Suitably the resilient member acts against the rotating seat to lock the rotating seat in the extended or retracted state. Here, the rotating seat forms a cam part against which the resilient member acts. Suitably the resilient member acts between the cam part and the chassis. The chassis may include a holding slot and the front arm is hinged at both sides to the connecting slot.

Preferably a linkage mechanism connects the at least one main rod to the two sets of foldable rear wheel frames, wherein the linkage mechanism includes an interlocked sliding seat sheathed on the two chassis rods, a first linkage rod, and two second linkage rods. Here, both ends of the first linkage rod are respectively hinged to the at least one main rod and the interlocked sliding seat. Suitably, first ends of the two second linkage rods are respectively connected to one set of foldable rear wheel frames and second ends of the two second linkage rods are respectively hinged to the interlocked sliding seat.

Preferably, a protective casing is fitted to a part of the chassis rod proximate to a rear end between the rear-connected seat body and the interlocked sliding seat.

Preferably, the foldable rear wheel frames include a parallel four-bar structure.

Preferably, the foldable golf cart further comprises two main rods arranged in parallel.

Preferably, a frame-locking device is placed between and connects each main rod and the rear- connected seat body.

Preferably, a handle-locking device is placed between and connects the handle and the handle- connected seat body.

Although a few preferred embodiments of the present invention have been shown and described, it will be appreciated by those skilled in the art that various changes and modifications might be made without departing from the scope of the invention, as defined in the appended claims.

Advantages of embodiments of the present invention will be apparent from the following detailed description of the exemplary embodiments thereof, which description should be considered in conjunction with the accompanying drawings in which like numerals indicate like elements, in which:
Figure 1 is the structural diagram of a foldable golf cart; and
Figure 2 is a structural diagram of the foldable golf cart's front wheel retraction and extension device.

Aspects of the invention are disclosed in the following description and related drawings directed to specific embodiments of the invention. Alternate embodiments may be devised without departing from the spirit or the scope of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Moreover, the terms "embodiments of the invention", "embodiments" or "invention" do not require that all embodiments of the invention include the discussed feature, advantage or mode of operation.

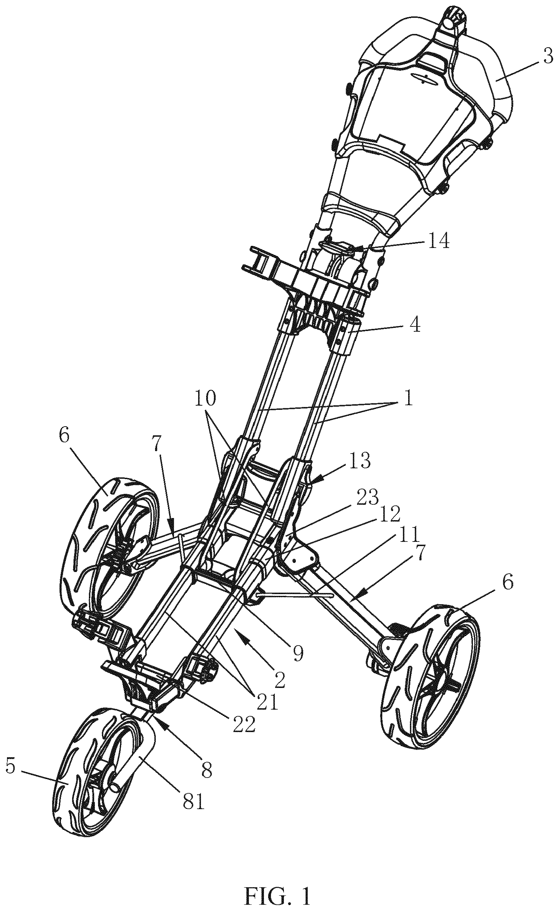

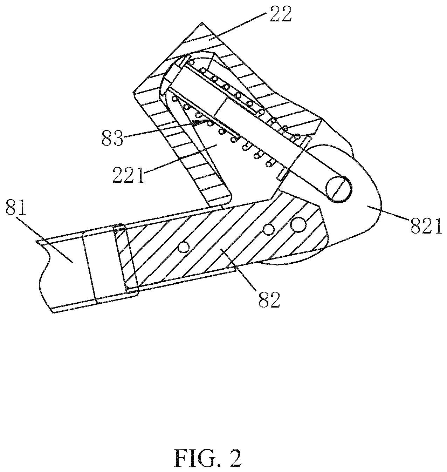

Referring generally to Figures 1-2, in an exemplary embodiment, the folding golf cart may include a chassis 2, a main rod 1, a handle 3, a handle-connected seat body 4 fixed to the top of the main rod 1, a front wheel 5, two rear wheels 6, and two sets of foldable rear wheel frames 7. The chassis 2 may include two parallel chassis rods 21, a front-connected seat body 22, and a rear-connected seat body 23. The front ends of the two chassis rods 21 may be fixed to the front- connected seat body 22. The rear ends of the two chassis rods 21 may be fixed to the rear- connected seat body 23. The handle 3 may be rotationally connected to the handle-connected seat body 4. The bottom part of the main rod 1 may be hinged to the rear-connected seat body 23. The two rear wheels 6 may be respectively connected to the sides of the rear-connected seat body 23 through the foldable rear wheel frames 7. The middle part of the front-connected seat body 22 may be connected to the front wheel 5 through a front wheel retraction and extension device 8.

The front wheel retraction and extension device 8 may include a front fork 81, a rotating seat 82 fixed to the rear end of the front fork 81, and a spring jack mechanism 83 for locking the rotating seat 82 in the extended or retracted position. The bottom part of the front-connected seat body 22 may be fitted with a holding slot 221. The part of the rotating seat 82 close to the rear end may be hinged at both sides of the holding slot 221. The rear end of the rotating seat 82 may be fitted with a cam part 821. The spring jack mechanism 83 may be connected between the holding slot 221 and the cam part 821. The spring jack mechanism 83 may be a spring. When the front fork 81 is in the retracted or extended position, the front fork 81 may tend to rotate downwards under the gravitational effects of the front wheel 5, the front fork 81, and the rotating seat 82, whereas the spring jack mechanism 83 may lift the cam part 821 of the rotating seat 82 to generate an upward rotation and offset the gravitational effects of the front wheel 5, the front fork 81, and the rotating seat 82, so as to lock the front fork 81 in the retracted or extended position. Appropriate force exerted by the hands can extend or retract the front fork 81. The front fork 81 can rotate 180° for easy retraction or extension, convenient operation, saved time and energy, a substantially smaller folded volume, saved space, and convenient storage and transportation.

The main rod 1 may be connected to the two sets of foldable rear wheel frames 7 through a linkage mechanism. The linkage mechanism may include an interlocked sliding seat 9, a first linkage rod 10, and two second linkage rods 11. The interlocked sliding seat 9 may be sheathed on the two chassis rods 21. Both ends of the first linkage rod 10 may be respectively hinged to the main rod 1 and the interlocked sliding seat 9. The first ends of the two second linkage rods 11 may be respectively connected to one set of foldable rear wheel frames 7. The second ends of the two second linkage rods 11 may be respectively hinged to the interlocked sliding seat 9. As the main rod 1 is retracted, the linkage mechanism may cause the two sets of foldable rear wheel frames 7 to retract, making retraction more convenient.

The part of the chassis rod 21 close to the rear end may be fitted with a protective casing 12. The protective casing 12 may be fitted between the rear-connected seat body 23 and the interlocked sliding seat 9. The protective casing 12 can prevent the hands from being caught. A spring can be placed in the protective casing 12 to provide the forward thrust for the interlocked sliding seat 9, for easier and less labor-intensive retraction.

The foldable rear wheel frames 7 may include a parallel four-bar structure. There may be two main rods 1, which may be arranged in parallel for a more stable structure. A frame-locking device 13 may be placed between each main rod 1 and the rear-connected seat body 23 to connect them, and a handle-locking device 14 may be placed between the handle 3 and the handle-connected seat body 4 to connect them, which may help to unlock and fix the utility model in the extended position.

The structure of the chassis 2 of the utility model may include two chassis rods 21, which may make the utility model more stable and easier to fold. After the front wheel is installed on the chassis 2, the utility model may be more stable, with more flexible front wheel steering. The front wheel can be retracted between the two chassis rods 21. The front wheel can be retracted into the chassis 2 for a smaller folding volume.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art (for example, features associated with certain configurations of the invention may instead be associated with any other configurations of the invention, as desired).

Therefore, the above-described embodiments should be regarded as illustrative rather than restrictive. Accordingly, it should be appreciated that variations to those embodiments can be made by those skilled in the art without departing from the scope of the invention as defined by the following claims.

## Claims

1. A foldable golf cart comprising:
a chassis (2); and
a front wheel assembly comprising a front wheel arm (81) to which a front wheel (5) is arranged so as to rotate relative thereto,
**characterized in that**
the front wheel arm (81) is connected to the chassis (2) through a front wheel retraction and extension device (8) such that the front wheel arm (81) is moveable between an extended state and a retracted state.

2. The foldable golf cart of claim 1, wherein the front wheel arm (81) is moveable by rotation between the extended state and the retracted state.

3. The foldable golf cart of claim 2, wherein the front wheel arm (81) rotates through an angle of greater than 90o between the extended state and the retracted state.

4. The foldable golf cart of claim 3, wherein the front wheel arm (81) rotates through an angle of greater than 135o between the extended state and the retracted state.

5. The foldable golf cart of claim 4, wherein the front wheel arm (81) rotates through an angle of around 180o between the extended state and the retracted state.

6. The foldable golf cart of any preceding claim, wherein the front wheel retraction and extension device includes a spring jack mechanism for locking the front wheel arm in the extended or retracted state; and
wherein the spring jack mechanism comprises a resilient member that acts to urge the front wheel arm towards the extended state or retracted state when the front wheel arm is in the extended or retracted state respectively.

7. The foldable golf cart of Claim 6, wherein the front wheel assembly includes a cam part formed on the front wheel arm, wherein the cam part includes first and second opposed surfaces, and the resilient member acts on the first surface when the front wheel arm is in the extended state and the resilient member acts on the second surface when the front wheel assembly is in the retracted state.

8. The foldable golf cart of Claim 7, wherein the cam part includes a third surface that joins the first surface to the second surface and wherein, as the front wheel arm rotates, the resilient member slides relative to the surface of the cam part.

9. The foldable golf cart of Claim 8, wherein the cam part is shaped so as to compress the resilient member as the contact between the resilient member and cam part transitions from the first surface to the third surface and shaped so as to compress the resilient member as the contact between the resilient member and cam part transitions from the second surface to the third surface.

10. The foldable golf cart of any of Claims 6 to 9, wherein the resilient member acts against the chassis.

11. The foldable golf cart of any of Claims 6 to 10, wherein the chassis (2) is fitted with a holding slot (221) and the front wheel arm (81) is hinged at both sides of the holding slot and the resilient member (83) is connected between the holding slot and cam part.

12. The foldable golf cart of any preceding claim, wherein the chassis (2) comprises two parallel chassis rods (21).

13. The foldable golf cart of Claim 12, wherein the front wheel (5) is arranged at least partially between the two chassis rods (21) when in the retracted state.

14. The foldable golf cart of Claim 11 or 12, wherein the chassis includes a front-connected seat body wherein front ends of the two chassis rods (21) are fixed to the front-connected seat body and the front wheel arm is connected to the chassis at the front-connected seat body.

15. The foldable golf cart of any of Claims 11 to 13, wherein the chassis (2) includes a rear-connected seat body (23) wherein the two chassis rods (21) are fixed to the rear-connected seat body at rear ends and two rear wheels (6) respectively connected to sides of the rea-connected seat body through two sets of foldable rear wheel frames (7).
